# EUROPEAN PATENT APPLICATION

(11) **EP 4 389 938 A1**
(43) Date of publication of application: **26.06.2024**
(21) Application number: 22383284.1
(22) Date of filing: 23.12.2022
(51) Int. Cl.: C25B 1/26, C25B 9/015, C25B 9/15, C25B 9/17, C25B 9/63, C25B 11/02, C02F 1/461

(54) **ELECTROLYSIS CHAMBER**

(71) Applicant: Cetaqua, Centro Tecnológico del Agua, Fundación Privada, 08940 Cornellà de Llobregat (ES); AQUATEC, PROYECTOS PARA EL SECTOR DEL AGUA, S.A.U., 28037 Madrid (ES)
(72) Inventor: PASTUR ROMAY, Mateo Bruno, 08021 BARCELONA (ES); ARUMÍ ARDERIU, Òscar, 08510 RODA DE TER (ES); ROMERO LESTIDO, Adriana Lucía, 08005 BARCELONA (ES); LEFÈVRE, Benoît, 13200 ARLES (FR)
(74) Representative: Sugrañes, S.L.P.

(57) **Abstract**

The invention relates to an electrolysis chamber (1) for treating water in the form of an electrolytic solution comprising a water inlet (2a) and a water outlet (2b) adapted to establish a flow (20) of electrolytic solution, a first end (3a) of the chamber being provided with a first sheet (4a) adapted to be connected to a first electric pole (5a), and a second end (3b) of the chamber being provided with a second sheet (4b) adapted to be connected to a second electric pole (5b) and an electrochemical reactor (6) being delimited between the two sheets, said reactor crossed in a longitudinal direction (L) by a plurality of electrodes (7), all the electrodes (7) being parallel to each other, wherein the electrodes have a square distribution in a transverse cross section (T), forming rows (R) and columns (C) in which first electrodes connected to the first sheet alternate with second electrodes connected to the second sheet.

## Description

### Technical field of the invention

The electrolysis chamber of the present invention is a chamber that allows an electrolysis process to be carried out on a flow of electrolytic solution, which is especially useful for producing hypochlorite from brine with a high chloride content, or to oxidise pollutants in wastewater treatment.

### Background of the invention

Chambers for carrying out electrolysis processes are known. These known chambers have a pair of conductive plates or conductive concentric cylinders by way of electrodes, connected to respective electric poles. In these chambers, the distance between electrodes is always constant and to increase electrolysis capacity it is necessary to increase the surface area of the electrodes, which requires increasing the size of the chamber.

An objective of the present invention is to therefore provide a chamber which, by being more compact, makes it possible to obtain the same performance as in known chambers.

### Description of the invention

The electrolysis chamber for treating water in the form of an electrolytic solution of the present invention is a chamber that comprises a water inlet and a water outlet adapted to establish a flow of electrolytic solution, a first end of the chamber being provided with a first sheet adapted to be connected to a first electric pole, and a second end of the chamber being provided with a second sheet adapted to be connected to a second electric pole and an electrochemical reactor being delimited between the two sheets, said reactor crossed in a longitudinal direction by a plurality of rod-shaped electrodes that are electrically joined to either the first sheet or to the second sheet, all the electrodes being parallel to each other, so that an electric current can be applied between the electrodes causing an electrolysis reaction in the electrolytic solution.

Essentially, the chamber is characterised in that the electrodes have a square distribution, forming rows and columns in which first electrodes connected to the first sheet alternate with second electrodes connected to the second sheet. This square distribution in rows and columns of alternating electrodes, and in which the arranged electrodes are equidistant, makes it possible to increase the ion exchange surface and therefore the electrolysis effect of the chamber, without it being necessary to increase the size of the chamber.

In a variant embodiment, the chamber comprises at least one dividing partition with holes, which defines compartments in the reactor, each hole being crossed by an electrode, and at least one passage for the passage of the flow of electrolytic solution between compartments, thereby advantageously causing turbulence in the flow of electrolytic solution, delaying the passage of the flow of electrolytic solution and favouring the mixing of the electrolytic solution and consequently, electrolysis. Preferably, the holes will be arranged around the central area of the partition. Preferably, the passage(s) will be arranged on the periphery of the dividing partition as inlets. As such, when there is only one peripheral passage, the distance between adjacent dividing partitions can be maximised if, for example, the passages are on opposite sides of the partitions in the reactor.

In a variant embodiment, the electrodes have odd symmetry in the transverse cross section, such that the distribution of electrodes is the same if the chamber is rotated 180 degrees with respect to the longitudinal direction thereof. Naturally, in other embodiments, the distribution of electrodes can also be the same if it is rotated at other angles with respect to the longitudinal direction thereof, for example, by multiples of 90 degrees.

In a variant embodiment, the distribution of the holes in the at least one dividing partition has odd symmetry, in other words, it has symmetry according to a first axis of symmetry and a second axis of symmetry perpendicular to the first axis, for example, a vertical axis and a horizontal axis, but they do not have even symmetry, in other words, they are not symmetric with respect to only the first axis or the second axis. As such, the distribution of holes is the same at least by rotating the dividing partition 180 degrees, advantageously allowing the electrodes to cross the holes whether or not the dividing partition is rotated by at least 180 degrees.

In a variant embodiment, the chamber comprises at least two dividing partitions, the holes of which are aligned in the longitudinal direction and the passages of which are misaligned in the longitudinal direction, thereby hindering the passage of the flow between compartments, increasing the time during which the flow remains in contact with the electrodes to thus favour the electrolysis of the flow and causing a turbulence effect that further favours the contact of the flow with the electrodes.

In a variant embodiment, the chamber comprises a plurality of dividing partitions, the holes of which are aligned in the longitudinal direction, thereby allowing the electrodes to be rod-shaped and cross the reactor to a large extent, without actually electrically coming in contact with the other sheet to which they are not electrically joined. It is envisaged that a space is left between the end of the electrode and the other sheet, to thus also favour the electrolysis of the flow that passes through this space, or the end of the electrode could also be joined to the other sheet by means of a dielectric element, to help support the electrodes.

In a variant embodiment, the plurality of dividing partitions are arranged perpendicular to the longitudinal direction, forming dividing partitions parallel to each other and parallel to the first conductive sheet and the second conductive sheet.

In a variant embodiment, the dividing partitions are equal and are rotated by a multiple of 90 degrees with respect to each other and to the longitudinal direction, facilitating the turbulent transit of the flow. It is envisaged that it must be a multiple of 90 degrees due to the square distribution of the electrodes, the rows and columns of which form a 90-degree angle.

In a variant embodiment, the dividing partitions are equal and are rotated by a multiple of 180 degrees with respect to each other and to the longitudinal direction, helping the flow move from one end of each compartment to another and to cross the electrodes, for example perpendicularly, thereby facilitating electrolysis.

In a variant embodiment, the electrodes tightly cross holes in each dividing partition, helping most of the flow necessarily pass through the passage of each dividing partition.

In a variant embodiment, all electrodes tightly cross holes in each dividing partition, helping all of the flow necessarily pass through the passage of each dividing partition.

In a variant embodiment, the electrodes have a circular cross section, thereby increasing the specific surface area and varying the distance between the specific surface area of adjacent electrodes of different polarity, i.e., between adjacent anodes and cathodes of the same row or column, in the same direction. It is worth noting that this effect could also be achieved with electrodes having an elliptical cross section.

### Brief description of the drawings

To complement the description, and for the purpose of helping to make the features of the invention more readily understandable, this specification includes a set of drawings that represent the following in an illustrative and non-limiting manner:
Figure 1 shows a longitudinal cross-sectional view of a chamber according to the present invention;
Figure 2a shows a transverse cross-sectional view of a chamber according to the present invention;
Figure 2b shows a detailed view of the square distribution of the electrodes in figure 2a;
Figure 2c shows a detailed view of the distance between two adjacent electrodes of figure 2a;
Figure 3a shows a dividing partition for the chamber of the present invention;
Figure 3b shows the dividing partition of figure 3a rotated 180 degrees;
Figure 4a shows another dividing partition for another chamber according to the present invention; and
Figure 4b shows the dividing partition of figure 4a rotated 90 degrees.

### Detailed description of the drawings

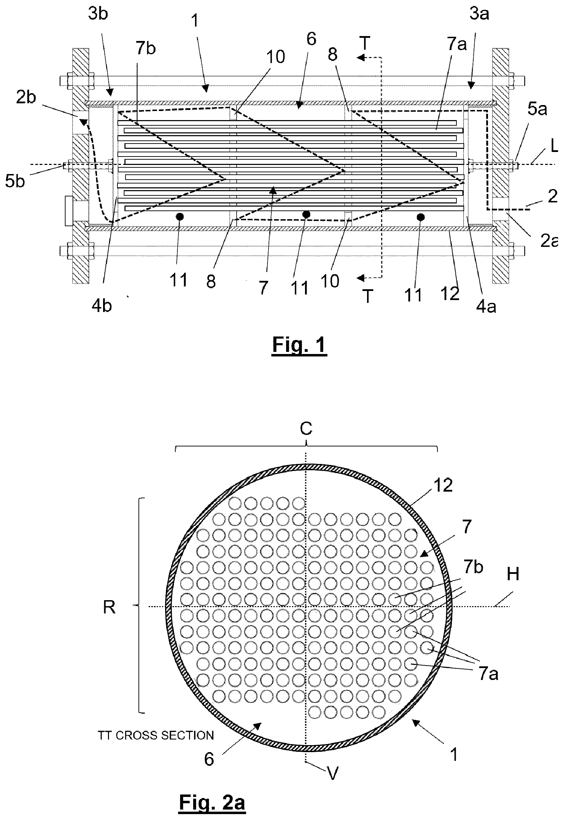

Figure 1 shows an electrolysis chamber 1 for treating wastewater in the form of an electrolytic solution of the present invention. As can be observed, the chamber 1 comprises a water inlet 2a and a water outlet 2b adapted to establish a flow 20 of electrolytic solution, a first end 3a of the chamber being provided with a first sheet 4a adapted to be connected to a first electric pole 5a, and a second end 3b of the chamber being provided with a second sheet 4b adapted to be connected to a second electric pole 5b and an electrochemical reactor 6 being delimited between the two sheets 4a, 4b, said reactor crossed in a longitudinal direction L by a plurality of rod-shaped electrodes 7 that are electrically joined to either the first sheet 4a or to the second sheet 4b, all the electrodes 7 being parallel to each other, such that first electrodes 7a are connected to the first sheet 4a and second electrodes 7b are connected to the second sheet 4b. It is envisaged that the electrodes 7 longitudinally cross almost the entire reactor 6, only being separated by a sufficient distance from the sheet to which they are not connected, which can be similar to the distance between adjacent parallel electrodes. The material of the electrodes 7 will be conductive, for example, a metal, such as titanium, optionally coated by another metal, such as rubidium - iridium, for electrochlorination applications, or titanium coated with rubidium - iridium or platinum for electrosynthesis, i.e., synthesis of organic compounds. It is also envisaged that the electrodes 7 could be made of boron-doped diamond or lead dioxide for advanced oxidation applications.

In that sense, when the first pole 5a is a positive pole and the second pole 5b is a negative pole, during an electrolysis process, wherein electric current is transmitted from the positive pole to the negative pole, the first electrodes 7a, electrically connected to the positive pole, will act as anodes, oxidising the electrolytic solution, and the second electrodes 7b, electrically connected to the negative pole, will act as cathodes, reducing the electrolytic solution. It is also envisaged that the first pole 5a and the second pole 5b are a negative pole and a positive pole, respectively, thereby reversing the functionality of the electrodes 7, or that the first pole 5a or the second pole 5b are alternated from time to time from positive pole to negative pole to favour the cleaning of the electrodes.

In this way, an electrolysis process can be carried out on the flow 20 of electrolytic solution, for example, to produce hypochlorite from a brine with a high chloride content, or to oxidise pollutants in wastewater treatment or other types of water such as surface water or groundwater, or even for the treatment of sludge.

Compared to an equivalent conventional chamber with plates of those known in the state of the art, it is observed that a 41% volume reduction is achieved, as indicated in the following table:

| | Specific anodic surface area (m2/m3) | Volume reduction |
|---|---|---|
| Conventional chamber with plates | 55.56 | - |
| Chamber according to the invention | 94.59 | 41% |

Nevertheless, even though this volume reduction exists, it has been observed, in a process for producing hypochlorite from a brine with a high chloride content, such as sodium chloride, and compared to different conventional chambers, that the performance would be equivalent, as shown in the following table:

| | kWh/kg NaClO | kg NaCl/kg NaClO |
|---|---|---|
| Conventional chamber with plates 1 | 2.60 | 1.66 |
| Conventional chamber with plates 2 | 2.84 | 2.01 |
| Conventional chamber with plates 3 | 2.08 | 1.42 |
| Chamber according to the invention | 2.34 - 2.88 | 1.95 - 2.95 |

It is also observed that the chamber 1 has two dividing partitions 8 with holes 9, which define three compartments 11 in the reactor 6, each hole 9 being crossed by an electrode 7, and each dividing partition 8 being provided with at least one passage 10 for the passage of the electrolytic solution between compartments 11. In the adjacent dividing partitions 8, the holes 9 are aligned in the longitudinal direction L but the passages 10 are misaligned in the longitudinal direction L, helping the flow 20 run through each compartment 11, forcing the passage thereof between the electrodes 7 and causing turbulence that further helps the flow 20 remain in contact between the electrodes 7, favouring the electrolysis thereof.

Figure 2a shows a transverse cross-sectional view T of the electrodes 7 of the chamber 1, wherein it is observed that the electrodes 7 have a circular cross section, thereby increasing the specific surface area, and a square distribution, forming rows R and columns C, in which first electrodes 7a connected to the first sheet 4a alternate with second electrodes 7b connected to the second sheet 4b, maintaining the same distance D between the centres of the adjacent electrodes 7 both in rows R and in columns C. It is worth noting that the electrodes 7 have odd symmetry in this transverse cross section T, i.e., symmetry with respect to a first axis V, which can be a vertical axis, and then a second axis H perpendicular to the first, which can be a horizontal axis, as shown in Figure 2a. Advantageously, as the distribution of the electrodes 7 has odd symmetry, the same type of dividing partition 8 can be used, as will be discussed later, since at least the same dividing partition 8 can be rotated 180 degrees and the holes thereof 9 will fit with the electrodes 7 of the chamber 1.

It is further observed that in this case the chamber 1 has walls 12 with a circular cross section, such that the dividing partitions 8 should partly follow this cross section, as will be seen later. Naturally, it is also envisaged that the chamber 1 has other cross sections, that preferably continue to have odd symmetry, for example, a square, hexagonal or octagonal cross section.

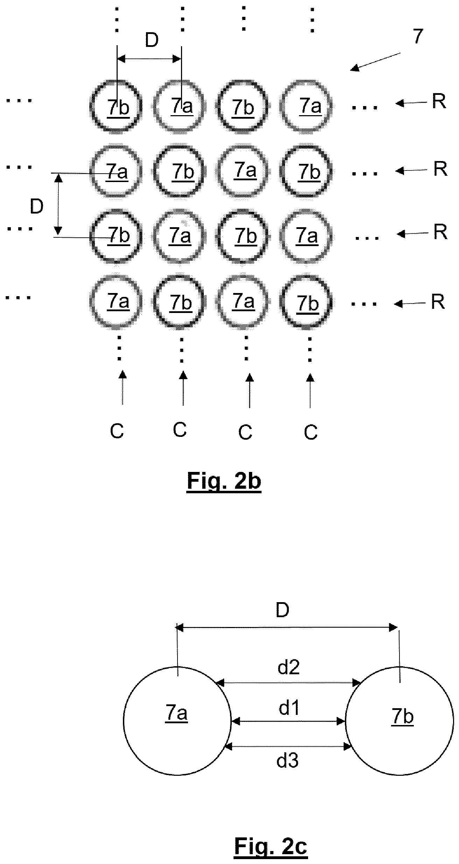

Figure 2b shows a detailed view of the cross section of some electrodes 7 in which the square distribution thereof can be seen in greater detail and wherein first electrodes 7a connected to the first sheet 4a alternate with second electrodes 7b connected to the second sheet 4b, with the same distance D between the centres of the adjacent electrodes 7 in rows R and columns C. Thus, when an electrode 7 acts as an anode, the adjacent electrodes 7 thereof both in row R and in column C will be cathodes, and vice versa, thereby favouring the electrolysis of the flow 20 that passes between the electrodes 7.

Figure 2c only shows two adjacent electrodes 7 of the square distribution with distance D between the centres of a first electrode 7a and a second electrode 7b. In these two electrodes 7, it is observed that the distance between the specific surface area of adjacent electrodes of different polarity, i.e., between adjacent anodes and cathodes of the same row R or column C, in the same direction, is variable. As an example, a first distance d1, a second distance d2 and a third distance d3 are provided in directions parallel to each other that are different. The fact that all the distances between the specific surface area of the adjacent electrodes 7 in rows R and columns C are different favours the electrolysis of the flow 20 that passes between the electrodes 7.

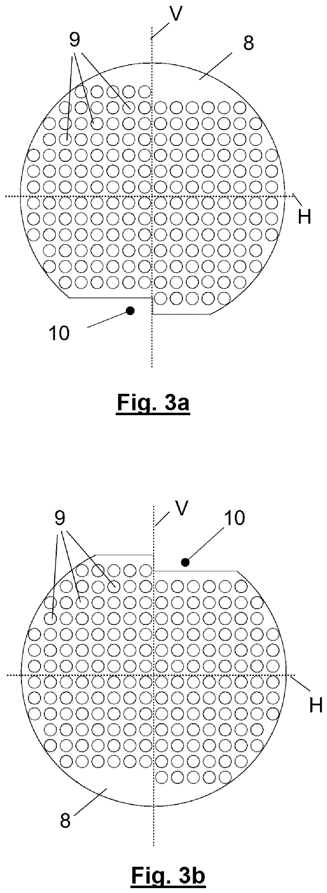

Figure 3a shows an embodiment of a dividing partition 8 for the chamber 1 of the present invention, preferably made of PVC, and corresponding to the distribution of electrodes 7 previously shown in figure 2a, which shows a set of holes 9 adapted to be closely, and preferably tightly, crossed by the electrodes 7. It is observed that the contour of the dividing partition 8 is essentially circular, following the contour of the wall 12 of the chamber 1, such that only one passage 10 for the passage of the flow 20 between compartments 11 is defined.

Advantageously, the distribution of holes 9 in the dividing partition 8 shown in figure 3a has odd symmetry, with respect to a first axis V and then a second axis H, such that the same dividing partition 8 model rotated 180 degrees can be used, as shown in figure 3b, thereby having the same distribution of holes 9 but having the passage 10 on the opposite side thereof. This favours the turbulent passage of the flow 20 in the compartment 11 arranged between two dividing partitions 8 of the same model, one arranged without rotation and the other rotated 180 degrees. In that sense, in the reactor 6 of the chamber 1, equal dividing partitions 8 rotated by a multiple of 180 degrees with respect to each other and to the longitudinal direction L can be used. Naturally, other dividing partitions 8 can be successively arranged, rotated 180 degrees to form more compartments 11, keeping the passages 10 alternating on one side and the other, for example on the top and bottom of the reactor 6.

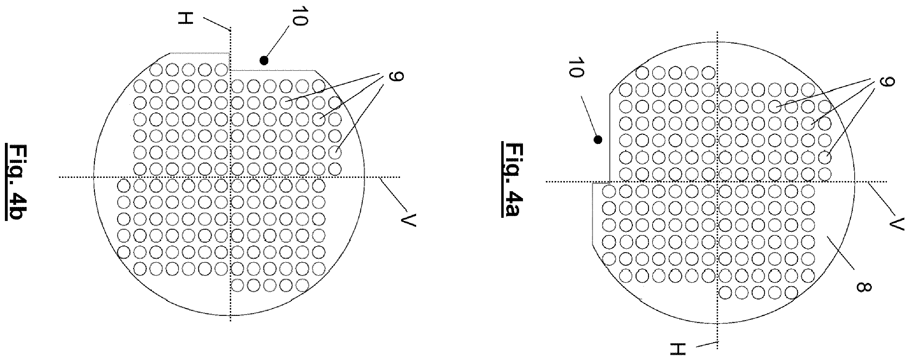

Figure 4a shows another embodiment of a dividing partition 8 for another chamber 1 of the present invention, which can also preferably be made of PVC, and corresponds to another distribution of electrodes 7, also with odd symmetry. In that sense, this distribution of electrodes 7, and therefore of holes 9, in the dividing partition 8 makes it possible to use equal dividing partitions 8 in the reactor 6 of the chamber 1, said partitions rotated by a multiple of 90 degrees with respect to each other and to the longitudinal direction L, for example, 90, 180 and 270 degrees, in other words, by multiples of a quarter turn. By way of example, figure 4b shows the dividing partition 8 of figure 4a turned a quarter turn, in which it is observed that the same square distribution of holes is maintained, which would correspond to the square distribution of electrodes 7 of the chamber 1.

## Claims

1. An electrolysis chamber (1) for treating water in the form of an electrolytic solution comprising a water inlet (2a) and a water outlet (2b) adapted to establish a flow (20) of electrolytic solution, a first end (3a) of the chamber being provided with a first sheet (4a) adapted to be connected to a first electric pole (5a), and a second end (3b) of the chamber being provided with a second sheet (4b) adapted to be connected to a second electric pole (5b) and an electrochemical reactor (6) being delimited between the two sheets (4a, 4b), said reactor crossed in a longitudinal direction (L) by a plurality of rod-shaped electrodes (7) that are electrically joined to either the first sheet (4a) or to the second sheet (4b), all the electrodes (7) being parallel to each other, **characterised in that** the electrodes have a square distribution in a transverse cross section (T), forming rows (R) and columns (C) in which first electrodes (7a) connected to the first sheet (4a) alternate with second electrodes (7b) connected to the second sheet (4b).

2. The chamber (1) according to claim 1, **characterised in that** it comprises at least one dividing partition (8) with holes (9), which defines compartments (11) in the reactor (6), each hole (9) being crossed by an electrode (7), and at least one passage (10) for the passage of the electrolytic solution between compartments (11).

3. The chamber (1) according to the preceding claim, **characterised in that** the distribution of the holes (9) in the at least one dividing partition (8) has odd symmetry.

4. The chamber (1) according to any one of the preceding claims, **characterised in that** the electrodes have odd symmetry in the transverse cross section (T).

5. The chamber (1) according to any one of claims 2 to 4, **characterised in that** it comprises at least two dividing partitions (8), the holes (9) of which are aligned in the longitudinal direction (L) and the passages (10) of which are misaligned in the longitudinal direction (L).

6. The chamber (1) according to the preceding claim, **characterised in that** it comprises a plurality of dividing partitions (8), the holes (9) of which are aligned in the longitudinal direction (L).

7. The chamber (1) according to any one of claims 5 to 6, **characterised in that** the plurality of dividing partitions (8) are arranged perpendicular to the longitudinal direction (L).

8. The chamber (1) according to any one of claims 2 to 7, **characterised in that** the dividing partitions (8) are equal and are rotated by a multiple of 90 degrees with respect to each other and to the longitudinal direction (L).

9. The chamber (1) according to the preceding claim, **characterised in that** the dividing partitions (8) are equal and are rotated by a multiple of 180 degrees with respect to each other and to the longitudinal direction (L).

10. The chamber (1) according to any one of claims 2 to 9, **characterised in that** the electrodes (7) tightly cross holes (9) in each dividing partition (8).

11. The chamber (1) according to the preceding claim, **characterised in that** all the electrodes (7) tightly cross holes (9) in each dividing partition (8).

12. The chamber (1) according to any one of the preceding claims, **characterised in that** the electrodes (7) have a circular cross section.
